# EUROPEAN PATENT SPECIFICATION

(11) **EP 1 887 768 B1**
(45) Date of publication and mention of the grant of the patent: **23.03.2011**
(21) Application number: 06016645.1
(22) Date of filing: 09.08.2006
(51) Int. Cl.: H04M 1/60

(54) **Connector and method for managing the connection**
Verbinder und Verfahren zur Verbindungsverwaltung
Connecteur et procédé pour la gestion de la connexion

(43) Date of publication of application: 13.02.2008
(73) Proprietor: Vodafone Holding GmbH, 40027 Düsseldorf (DE)
(72) Inventor: de Weerd, Jeroen, 6229 WE Maastricht (NL)
(74) Representative: Cullinane, Marietta Bettina

(56) References cited:
- EP-A- 1 569 425
- WO-A-00/70779
- US-A1- 2004 122 542
- US-A1- 2005 108 462
- US-A1- 2006 046 656

## Description

The present invention relates to a connector for connecting at least one output device to a rendering device and to a method for managing the connection.

Mobile phones have become a preferred solution to ensure that a user can be reached regardless of his current location. In order to successfully establish a communication connection with the user of the mobile phone, it is, however, mandatory that the user will be altered when a call comes in. In general a ring tone will inform the user accordingly. Also vibrating systems have been introduced to indicate an incoming call.

These known solutions, however, require that the user is either close enough to the mobile phone to feel the vibration and/or is able to hear the ring tone. Especially the latter requirement is often not fulfilled. If the user is for example listening to music or watching TV, the volume of the media output to him may be turned up to high and may not allow the user to hear the ring tone. Also in the event where the user is wearing a head set or earphones to listen to the media, he will not be aware of an incoming call, as he will not hear the ring tone.

In order to address this problem, enhanced acoustic devices have been suggested, wherein a control system is implemented to stop the rendering of music or other audio, when an incoming phone call reaches a mobile phone. Such an enhanced acoustic device is for example described in JP 2001 10 31 35 A. One disadvantage of this solution is that the usage of other devices, which the user may already own and which are not provided with the control system, will still bear the risk of missing a call.

In US 2006/0046656 A1 a Bluetooth device, which is connectable to audio equipment is described. The connection between a mobile communication device and the Bluetooth device is carried out between a Bluetooth transceiver at the mobile communication device and a Bluetooth transceiver at the Bluetooth device. The communication between the two transceivers is a communication according to the Bluetooth specification. One disadvantage of this Bluetooth device is that both the Bluetooth device and the mobile communication device have to be equipped with a Bluetooth transceiver.

Finally, WO 00/70779 relates to a combined-use assembly of mobile telephone and audio. In this assembly a controller is used to switch between a connection from a mobile telephone and an audio apparatus to a phone set. In a semi-automatic version, the controller provides alert sound tones to earphones to inform the user of an incoming call, so that the user can change the connection manually. The controller is connected to an income call sensor. The income call sensor can for example sense radio frequency signals and is connected to, inserted into or included in the mobile telephone. One disadvantage of this assembly is that the set-up of the controller and the sensor is fairly complex.

The problem to be solved by the present invention is thus to overcome these drawbacks of the prior art solutions.

The invention is based on the finding that the problem can be solved by providing means to control the connection of a rendering device and an output device within the connection itself.

According to a first aspect, the present invention relates to a connector for connecting at least one output device to a rendering device, wherein the connector comprises at least one interruption unit for managing the connection of the output device to the rendering device by altering the transmission of signals from the rendering device to the output device and at least one detection unit, the detection unit and the interruption unit being connected for transmittal of a detection signal to the interruption unit. The connector is characterized in that the detection unit serves for detecting at least one external signal, which is representative of a call setup, in the frequency range of control channels of a mobile communication standard and in that the detection unit is set to only detect signals in this frequency range if the signal strength is above a threshold value .

The external signal according to the present invention is a signal originating from a device which is different to the rendering device and the output device. Preferably the external signal is an electromagnetic wave signal in the frequency range of for example 900 MHz.

By providing a connector which includes the functionalities necessary for managing the transmission of audio signals to the user as a separate entity, the application of the present invention is extremely flexible. The connector may be used with different output devices and/or rendering devices. Hence, a user will not be forced to replace any of his presently owned rendering devices or output devices, if he wants to be alerted of incoming calls or other events. The power supply for the connector may be a power source, such as a battery within the connector. It is, however, also possible that the connector derives the necessary power from the rendering device. If the output device is equipped with a power supply, the connector may also obtain the power from this device.

The rendering device may be any device capable of rendering media, such as a stereo system, a TV, a CD-Player, a DVD player. In particular, the rendering device is a device for rendering audio content and emitting audio signals to an output device. The device may be portable such as an MP3-player or Ipod ®. The output device is preferably connected to the rendering device in a wired fashion, i.e. by a cable which may be part of the output device or could be connected thereto. The output device may for example be a loudspeaker, head set or earphones.

The detection unit preferably detects external signals without necessitating a predetermined connection to the device from which the external signal originates to be established beforehand. Since the detection of the external signals is, hence, initiated from the, the connector can have a simple design compared to entities such as Bluetooth enabled head sets or earphones. Those entities require a considerable amount of processing power, in order to be able to establish a connection with for example a mobile phone and to then receive signals from the mobile phone via this connection.

According to a preferred embodiment the detection unit is used to detect a sequence of signals. The sequence of signals is the call setup signal of a mobile phone, when a call comes in. By not only monitoring individual signals in the surrounding of the connector, the reliability of the relevance of the detected external signals can be increased.

The detection unit is set to only detect a preset signal or a preset sequence of signals. One possible embodiment of the detection unit may be a diode.

The detection unit and the interruption unit are connected for transmittal of a detection signal to the interruption unit. The detection signal may be a control signal activating or deactivating the interruption unit or parts of it.

The interruption unit may include an interruption element such as a switch or a relay, preferably a solid-state relay. The interruption element is preferably reversible so that the connection from the rendering device to the output device may be re-established once the user has been informed on for example the incoming call.

According to one embodiment, the interruption unit comprises means for inputting a preset audio signal into the connection from the connector to the output device. The means for inputting the preset audio signal may include a storage unit, where the preset audio signal is being stored. The interruption element used to interrupt the connection between the rendering device and the output device may also be used to establish a connection to the storage device. In this case the interruption element is preferably a switch. By inputting a preset audio signal for example a ring tone can be fed to the output device. This is advantageous in that the user will be able to identify the reason for the interruption of audio output from the rendering device. In particular, if the interruption unit only disconnects the transmission of audio signals from the rendering device to the output device for a short period of time, the user may mistake the interruption to be part of the audio signal of the rendering device, e.g. a pause between songs.

The detection unit is set to and / or is adjusted to detect signals in the frequency range of control channels of a mobile communication standard, in particular GSM, UMTS and/or any 3G or 4G-standard. The frequency range may be for example 890-915 MHz and/or 935-960 MHz for a GSM standard network. By monitoring signals within such frequency ranges, signals on control channels can be detected. Hence, the connector will be able to detect signals such as the call setup signal, which is generated by a mobile phone, when a call comes in. The connector may be set to only detect a specific sequence of signals in this frequency range representative of for example the call setup signal. In addition, the detection may be set to only detect signals of specific signal strength. Thereby signals originating form a mobile phone close to the user will be detected, whereas other signals within this frequency range originating from other mobile phones will be ignored.

According to one embodiment, the connector comprises at least one receiving means for receiving an attachment unit of the output device and at least one insertion means for inserting into at least one receiving unit at the rendering device. The receiving means may be a socket and the insertion means may be a plug. Besides enabling signal transmission, the attachment entities may also serve to provide power to the connector, if the connector is set up to obtain its power from one of the devices.

By providing such mechanical attachment entities, the assembly of the setup, including the connector, can be easily performed and the connector may also be removed easily. The removal of the connector may be desirable, if the connector can not be set to a passive state. In that case, the user can remove the connector, if he does not want to be disturbed, while listening to the audio output of the rendering device, e.g. while listening to music.

Preferably, the receiving means and the insertion means are designed to be complementary to standard plugs and sockets provided on commercial output devices and rendering devices. By providing standard receiving and insertion means, the connector can be used with different devices without necessitating amendment to the connector or the devices.

The connector may be designed according to different standards. Hence, the present invention also encompasses connectors which are provided with for example two insertion means and do not comprise receiving means. Such an embodiment of the connector may be used with an output device and a rendering device according to a standard where both devices have receiving means.

The connector may represent only a part of the connection between the rendering device and the output device. In this case the connector may be an adapter. This adapter may be attached for example to the rendering device and an attachment unit of the output device, such as a plug at the end of a cable of the output device, may be inserted into receiving means of the connector. The connector may, however, also comprise a cable, wherein the receiving means and/or insertion means for attachment to the respective devices are provided at the ends of the cable. This embodiment of the connector may be used for devices, where corresponding attachment units and/or receiving units are provided on the device.

According to a further aspect of the invention, the problem is solved by a method for managing the connection from a rendering device to at least one output device with a connector interposed between the rendering device and the output device. The method is characterized in that, upon detection of at least one external signal which is representative of a call setup, in the frequency range of control channels of a mobile communication standard at the connector, the transmission of signals from the rendering device to at least one output device is being altered. The method is characterized in that detected signals in this frequency range are only detected if the signal strength is above a threshold value. The alteration of the transmission may be an interruption of the transmission of signals from the rendering device to the output device. Alternatively or additionally, the alteration may be the feeding of a preset audio signal such as a ring tone, to the output device.

Advantages and features described with respect to the connector also apply to the method accordingly and vice versa.

The invention will now be described again with reference to the enclosed figures, wherein:
Figure 1 shows a schematic view of a system to be used with the inventive method and
Figure 2 shows a schematic view of an embodiment of the connector according to the invention.

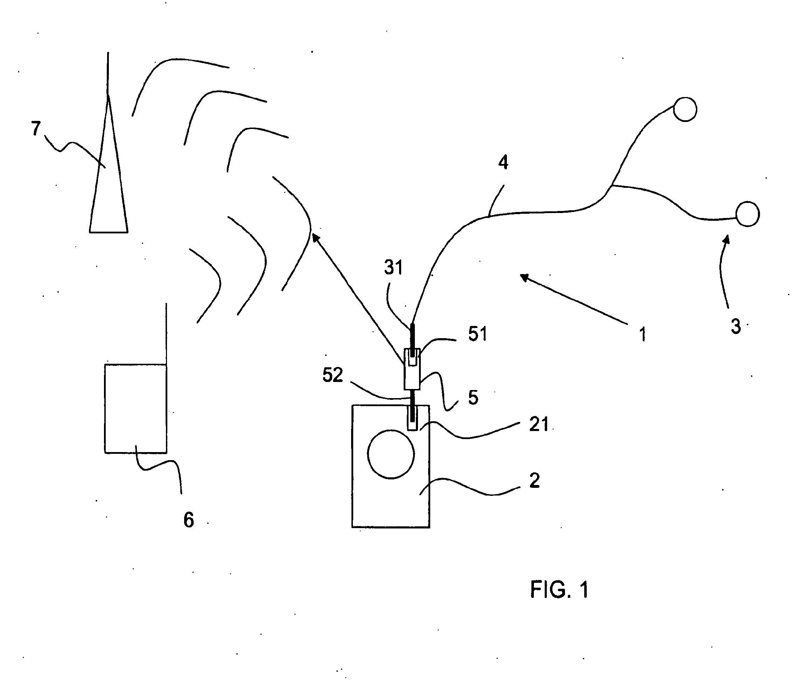

The system 1 in Figure 1 comprises a rendering device, which is depicted as an MP3-player 2. The MP3-player 2 is connected to a head set 3. Via the cable 4 of the head set 3 signals representing audio content such as music can be transmitted to the head set 3.

Interposed between the MP3-player 2 and the headset 3, in particular its cable 4, a connector 5 is provided. The connector 5 comprises a socket 51 as receiving means at one end and at the opposite end a plug 52 is provided as insertion means. The plug 52 is depicted as being inserted into a receiving unit 21 of the MP3-player 2.

With the connector 5 being inserted into the receiving unit 21 of the MP3-player 2 the socket 51 of the connector 5 can serve for receiving the plug 31 of the head set 3. The connector 5 is thus interposed in the connection between the MP3-player 2 and the head set 3. The power for operating the connector 5 may be obtained from the MP3-player 2 via the plug 52. Alternatively, a power source such as a battery (not shown) may be provided within the connector 5. Where no connector 5 is used, the plug 31 of the cable 4 of the head set 3 will be inserted directly into the receiving unit 21 of the MP3-player 2.

Also shown in Figure 1 is a mobile phone 6, which is the terminal of a cellular communication network. With cellular networks the mobile phone 6 is set up to send and receive signals form a base station 7. The signalling between the mobile phone 6 and the base station 7 is schematically indicated in Figure 1.

Depending on the network standard, the frequency used for signalling between the mobile phone 6 and the base station 7 is different. In a GSM network the uplink signalling from the mobile phone 6 to the base station 7 will for example be carried on in a frequency range or channel of 890-915 MHz and the downlink signalling from the base station 7 to the mobile phone 6 will be carried out in a frequency range or channel of 935-960 MHz. Within these frequency channels logical channels are established. For example control channels are used. These control channels will only carry cellular system data. Via these channels for example the signalling for call setup will be conducted.

If a phone call is to be established with the mobile phone 6, the base station 7 may transmit the mobile number of the mobile phone 6. The mobile phone 6 may, upon receipt of the signal responds by sending its identifying information again to the base station 7, along with a message confirming that it received the page, via a control channel. At that point voice channels for conducting the phone call will be assigned.

According to the present invention, the connector 5 is equipped with a detection unit 53 for detecting signals external to the MP3-player 2 and the head set 3. In particular, the connector 5 may be set to detect signals in a frequency range that comprises the control channel of a cellular network.

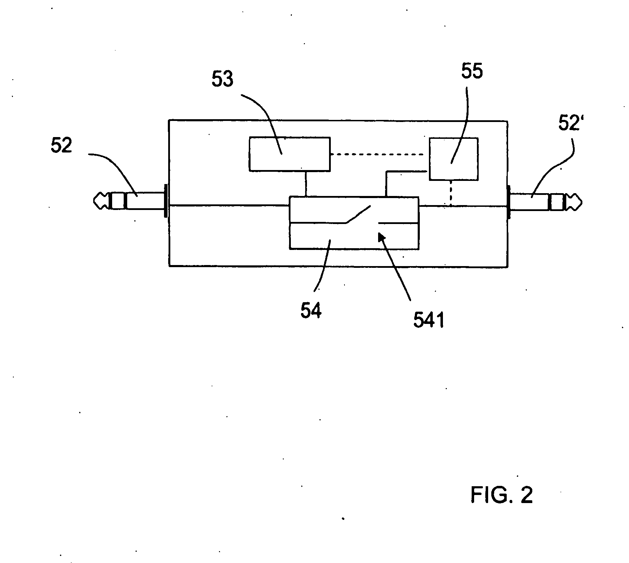

One embodiment of the connector 5 is schematically shown in Figure 2. In this embodiment the connector 5 is equipped with two plugs 52, 52' but does not include a socket 51. The connector 5 may, alternatively, have the same layout as the connector 5 shown in Figure 1.

The connector 5 comprises a detection unit 53 and an interruption unit 54. Furthermore the depicted embodiment of the connector 5 comprises a storage unit 55. The units are shown schematically in Figure 2.

The detection unit 53 may be a diode for detection of signals within a preset frequency or frequency range. The detection unit may be set up to detect only signals within the preset frequency range, if the signal strength is above a threshold value. Alternatively the detection unit may be set to only further process the stronger signal, if more than one signal or sequences of signals are being detected. This filtering of signals will lower the risk that signals originating from a mobile phone, which does not belong to the user of the MP3-player 2 will be detected, as it can be assumed that the mobile phone belonging to this user will be in a closer vicinity to the MP3-player 2 than the mobile phone of other users.

The interruption unit 54 comprises an interruption element 541, such as a switch or a solid-state relay, for interrupting the connection between the plug 52 and the opposite plug 52' of the connector 5. By interrupting this connection, the signals, in particular the audio signals transmitted from the MP3-player 2 will no longer reach the head set 3. The interruption unit 54 may further be connected to a storage unit 55, where at least one preset audio signal may be stored. This signal can for example be a ring tone. The interruption unit 54 or a separate managing unit (not shown) provided within the interruption unit 54 or separately may establish a connection between the storage unit 55 and the plug 52' which will be connected to the cable 4 to the head set 3. Thereby, the preset audio signal of the storage unit may be fed into the connection to the head set 3 and the respective audio signal will be output at the head set 3.

Once the detection unit 53 detects an external signal within the frequency range preset within the detection unit 53, in particular a call setup signal, a detection signal will be transmitted to the interruption unit 54. The interruption unit 54 will interrupt the connection between the two plugs 52, 52' and thereby the connection from the MP3-player 2 to the head set 3 will be interrupted. Simultaneously, the audio signal stored in the storage unit 55 may be fed into the connection between the interruption unit 54 and the plug 52'. The detection signal may be transmitted once upon first detection of the external signal.

Once the detection unit 53 does no longer detect the external signal within the preset frequency or frequency range, the detection unit 53 may emit a termination signal to the interruption unit 54. Upon receipt of this termination signal, the interruption unit 54 will re-assume the status it had before the initial detection signal was received. In particular, the connection between the two plugs 52 and 52' will be re-established. The audio signals from the MP3-player 2 will now be transmitted to the head set 3 and the user can listen to the music again.

Alternatively, it will also be possible, that the detection unit 53 only emits the initial detection signal to the interruption unit 54 and the interruption element 541 is activated for a given time. In that case, the connection between the plugs 52 an 52' will be re-established once the given time period has lapsed.

If a preset audio signal had been fed to the connection to the head set 3 from the storage unit 55, the transmission of this audio signal will also be suppressed, once the original external signal is no longer detected by the detection unit 53 or once the given period of time after the detection signal has passed. According to the present invention, the interruption of the connection and the feeding of the preset audio signal, such as a ring tone, may be maintained for a predetermined period of time after the last detection of the external signal by the detection unit 53. Thereby it is ensured that the user will have sufficient time to realize the alert.

The present invention is not limited to a connector as shown in the Figures. Different lay-outs of the connector can be used. Also the units within the jack as shown in Figure 2 can be laid out differently and may in particular be partially combined. Also additional units may be provided. Such a unit may for example be a filter. The filter may be used to filter detected signals according to a threshold of the signal strength and to filter a preset signal sequence out of a number of signals detected. The latter filter may be used to detected signal frequencies in advanced communication networks such as 3G or 4G networks.

The connector 5 may also be used for other rendering devices. For example a TV or a stereo system can be connected to loud speakers with the connector being interposed in the connection.

This invention allows a user to listen to the music via wired headphones and not miss any incoming phone calls. The invention does not require any of the equipment to be adapted and is independent from the device producing the audio signals and the wired headphones. It is very easy to use. The user plugs in the connector between the rendering device and the output device and will be able to listen to music and will still be alerted of an incoming call.

## Claims

1. Connector for connecting at least one output device (3) to a rendering device (2), wherein the connector (5) comprises at least one interruption unit (54) for managing the connection of the output device (3) to the rendering device (2) by altering the transmission of signals from the rendering device (2) to the output device (3) and at least one detection unit (53), the detection unit (53) and the interruption unit (54) being connected for transmittal of a detection signal to the interruption unit (54), wherein the detection unit serves for detecting at least one external signal, which is representative of a call setup, in the frequency range of control channels of a mobile communication standard and wherein the detection unit is set to only detect signals in this frequency range if the signal strength is above a threshold value.

2. Connector according to claim 1, **characterized in that** the detection unit (53) detects a sequence of signals.

3. Connector according to any of claims 1 or 2, **characterized in that** the interruption unit (54) comprises an interruption element (541) for interrupting the connection of signal transfer of the rendering device (2) to the output device (3).

4. Connector according to any of claims 1 to 3, **characterized in that** the interruption unit (54) comprises means (55) for inputting a preset audio signal into the connection from the connector (5) to the output device (3).

5. Connector according to any of claims 1 to 4, **characterized in that** the detection unit (53) is set to and / or can be adjusted to detect signals in the frequency range of at least one control channel of a mobile communication standard, in particular GSM and/or UMTS.

6. Connector according to any of claims 1 to 5, **characterized in that** it comprises at least one receiving means (51) for receiving an attachment unit (31) of the output device (3) and at least one insertion means (52) for inserting into at least one receiving unit (21) at the rendering device (2).

7. Method for managing the connection from a rendering device (2) to at least one output device (3) with a connector (5) interposed between the rendering device (2) and the output device (3), **characterized in that** upon detection of at least one external signal, which is representative of a call setup, in the frequency range of control channels of a mobile communication standard at the connector (5) the transmission of signals from the rendering device (2) to the output device (3) is being altered and signals in this frequency range are only detected if the signal strength is above a threshold value.

8. Method according to claim 7, **characterized in that** the connector (5) interrupts the connection between the rendering device (2) and the output device (3) and/or feeds a preset signal into the connection to the output device (3).

## Patentansprüche

1. Anschlussstück zum Verbinden von zumindest einem Ausgabegerät (3) mit einem Wiedergabegerät (2), wobei das Anschlussstück (5) zumindest eine Unterbrechungseinheit (54) zur Verwaltung der Verbindung des Ausgabegerätes (3) zu dem Wiedergabegerät (2) durch Änderung der Übermittlung von Signalen von dem Wiedergabegerät (2) zu dem Ausgabegerät (3) und zumindest eine Detektionseinheit (53) umfasst, wobei die Detektionseinheit (53) und die Unterbrechungseinheit (54) für die Übermittlung eines Detektionssignals an die Unterbrechungseinheit (54) verbunden sind, wobei die Detektionseinheit (53) zum Detektieren zumindest eines externen Signals, das für einen Anrufaufbau repräsentativ ist, in dem Frequenzbereich eines Steuerkanals eines Mobilkommunikationsstandards dient und wobei die Detektionseinheit so eingestellt ist, dass diese nur Signale in diesem Frequenzbereich detektiert, wenn die Signalstärke oberhalb eines Grenzwertes liegt.

2. Anschlussstück gemäß Anspruch 1, **dadurch gekennzeichnet, dass** die Detektionseinheit (53) eine Sequenz von Signalen detektiert.

3. Anschlussstück nach einem der Ansprüche 1 oder 2, **dadurch gekennzeichnet, dass** die Unterbrechungseinheit (54) ein Unterbrechungselement (541) zum Unterbrechen der Verbindung von Signalübermittlung von dem Wiedergabegerät (2) zu dem Ausgabegerät (3) umfasst.

4. Anschlussstück gemäß einem der Ansprüche 1 bis 3, **dadurch gekennzeichnet, dass** die Unterbrechungseinheit (54) Mittel (55) zur Eingabe eines vorbestimmten Audiosignals in die Verbindung von dem Anschlussstück (5) zu dem Ausgabegerät (3) umfasst.

5. Anschlussstück nach einem der Ansprüche 1 bis 4, **dadurch gekennzeichnet, dass** die Detektionseinheit (53) einstellt ist und/oder angepasst werden kann, um Signale in dem Frequenzbereich zumindest eines Steuerkanals eines Mobilkommunikationsstandards, insbesondere GSM und/oder UMTS zu detektieren.

6. Anschlussstück nach einem der Ansprüche 1 bis 5, **dadurch gekennzeichnet, dass** dieser zumindest ein Aufnahmemittel (51) zur Aufnahme einer Befestigungseinheit (31) des Ausgabegerätes (3) und zumindest ein Einführungsmittel (52) zum Einführen in zumindest eine Aufnahmeeinheit (21) an dem Wiedergabegerät (2) umfasst.

7. Verfahren zur Verwaltung der Verbindung von einem Wiedergabegerät (2) zu mindestens einem Ausgabegerät (3) mit einem zwischen das Wiedergabegerät (2) und das Ausgabegerät (3) zwischengeschalteten Anschlussstück (5), wobei bei Erkennen von zumindest einem externen Signal, das für einen Anrufaufbau repräsentativ ist, in dem Frequenzbereich eines Steuerkanals eines Mobilkommunikationsstandards an dem Anschlussstück (5) die Übermittlung von Signalen von dem Wiedergabegerät (2) zu dem Ausgabegerät (3) geändert wird und Signals in diesem Frequenzbereich nur detektiert werden, wenn die Signalstärke über einem Grenzwert liegt.

8. Verfahren nach Anspruch 7, **dadurch gekennzeichnet, dass** das Anschlussstück (5) die Verbindung zwischen dem Wiedergabegerät (2) und dem Ausgabegerät (3) unterbricht und/oder ein vorbestimmtes Signal in die Verbindung zu dem Ausgabegerät (3) einspeist.

## Revendications

1. Connecteur destiné à raccorder au moins un dispositif de sortie (3) à un dispositif de restitution (2), dans lequel le connecteur (5) comprend au moins une unité d'interruption (54) destinée à gérer la liaison entre le dispositif de sortie (3) et le dispositif de restitution (2) en modifiant la transmission de signaux du dispositif de restitution (2) au dispositif de sortie (3) et au moins une unité de détection (53), l'unité de détection (53) et l'unité d'interruption (54) étant raccordées afin de transmettre un signal de détection à l'unité d'interruption (54) dans lequel l'unité de détection sert à détecter au moins un signal externe, qui est représentatif de l'établissement d'un appel, dans la plage de fréquence de canaux de commande d'un standard de communication de mobile et dans lequel l'unité de détection est définie de manière à détecter uniquement des signaux dans cette plage de fréquence si l'intensité de signal est supérieure à une valeur de seuil.

2. Connecteur selon la revendication 1, **caractérisé en ce que** l'unité de détection (53) détecte une séquence des signaux.

3. Connecteur selon l'une quelconque des revendications 1 ou 2, **caractérisé en ce que** l'unité d'interruption (54) comprend un élément d'interruption (541) destiné à interrompre la liaison de transfert de signal du dispositif de restitution (2) au dispositif de sortie (3).

4. Connecteur selon l'une quelconque des revendications 1 à 3, **caractérisé en ce que** l'unité d'interruption (54) comprend des moyens (55) destinés à entrer un signal audio présélectionné sur la liaison du connecteur (5) au dispositif de sortie (3).

5. Connecteur selon l'une quelconque des revendications 1 à 4, **caractérisé en ce que** l'unité de détection (53) est définie et/ou peut être définie de manière à détecter des signaux dans la plage de fréquence d'au moins un canal de commande d'un standard de communication de mobile, en particulier, le GSM et/ou l'UMTS.

6. Connecteur selon l'une quelconque des revendications 1 à 5, **caractérisé en ce qu'**il comprend au moins un moyen de réception (51) destiné à recevoir une unité de fixation (31) du dispositif de sortie (3) et au moins un moyen d'insertion (52) destiné à assurer l'insertion dans au moins une unité de réception (21) sur le dispositif de restitution (2).

7. Procédé de gestion du raccordement d'un dispositif de restitution (2) à au moins un dispositif de sortie (3) avec un connecteur (5) interposé entre le dispositif de restitution et le dispositif de sortie (3) dans lequel, lors de la détection d'au moins un signal externe, qui est représentatif de l'établissement d'un appel, dans la plage de fréquence de canaux de commande d'un standard de communication de mobile au niveau du connecteur (5), la transmission de signaux du dispositif de restitution (2) au dispositif de sortie (3) est altérée et les signaux dans cette plage de fréquence sont uniquement détectés si l'intensité de signal est supérieure à une valeur de seuil.

8. Procédé de gestion selon la revendication 7, **caractérisé en ce que** le connecteur (5) interrompt la liaison entre le dispositif de restitution (2) et le dispositif de sortie (3) et/ou délivre un signal prédéfini sur la liaison vers le dispositif de sortie (3).
